# EUROPÄISCHE PATENTSCHRIFT

(11) **EP 1 500 689 B1**
(45) Veröffentlichungstag und Bekanntmachung des Hinweises auf die Patenterteilung: **03.01.2007**
(21) Anmeldenummer: 04013079.1
(22) Anmeldetag: 03.06.2004
(51) Int. Cl.: C09D 133/06, C08F 2/20, C08F 2/30, A23B 4/10

(54) **Beschichtungszusammensetzung und ihre Verwendung**
Coating composition and its use
Composition de revêtement et son utilisation

(30) Priorität: 24.07.2003 DE 10333623
(43) Veröffentlichungstag der Anmeldung: 26.01.2005
(73) Patentinhaber: Celanese Emulsions GmbH, 61476 Kronberg/Ts. (DE)
(72) Erfinder: Cabrera, Ivan, Dr., 63303 Dreieich (DE); Renisch, Volker, 65719 Hofheim (DE)
(74) Vertreter: Ackermann, Joachim

(56) Entgegenhaltungen:
- EP-A- 0 062 106
- EP-A- 0 538 571
- GB-A- 839 480
- GB-A- 1 278 813
- US-A- 2 227 163
- US-A- 4 670 505
- US-A- 5 679 735
- US-A1- 2002 042 466
- US-B2- 6 429 251

## Beschreibung

Die Erfindung betrifft die Verwendung von in Gegenwart von Schutzkolloiden hergestellten (Meth)acrylatdispersionen zur Verlängerung der offenen Zeit von Beschichtungszusammensetzungen, sowie deren Verwendung zur Beschichtung von Lebensmitteln.

Die Verwendung von wässrigen Polymerdispersionen zur Herstellung von Beschichtungszusammensetzungen ist an sich bekannt.

Eine besonders wichtige Eigenschaft bei der Verarbeitung von Beschichtungsmitteln ist die offene Zeit. Bei physikalisch trocknenden Farben gilt als offene Zeit diejenige Zeitspanne, innerhalb der auf einen noch feuchten Anstrich eine zweite Schicht aufgebracht werden kann, ohne dass nach dem Trocknen ein Ansatz sichtbar wird.

Nach dem Stand der Technik wird die jeweils gewünschte offene Zeit in der Regel durch Zugabe von Glykolen oder von hochsiedenden Lösemitteln eingestellt. Häufig kann eine gewünschte offene Zeit bereits durch Zugabe geeigneter Filmbildehilfsmittel erreicht werden. Bei emissions- und lösemittelfreien Farben ist die Zugabe von Lösemitteln im allgemeinen unmöglich. Deshalb kann in diesem Fall das Einstellen der offenen Zeit problematisch sein.

Eine offene Zeit im Bereich von zehn Minuten wird bei Beschichtungsmitteln als optimal angesehen, weil in dieser Zeitspanne noch Korrekturen durchgeführt werden können. Eine noch größere offene Zeit hat eine Anfälligkeit zur Verschmutzung zum Nachteil.

Aus dem Stand der Technik sind neben den oben genannten Maßnahmen noch weitere Methoden zur Beeinflussung der offenen Zeit von Beschichtungsmitteln bekannt.

Die US-A-6,303,189 beschreibt ein Verfahren zur Vergrößerung der offenen Zeit von wässrigen Beschichtungszusammensetzungen, bei dem wässrige Polyurethandispersionen sowie Koaleszenzmittel eingesetzt werden. In Vergleichsbeispielen wird gezeigt, dass wässrige Beschichtungszusammensetzungen auf Basis von Acrylatdispersionen, die keine Polyurethandispersion enthalten, eine deutlich reduzierte offene Zeit aufweisen.

Die EP-A-593,151 beschreibt ein Verfahren zur Vergrößerung der offenen Zeit, wobei ein Latex und ein Modifiziermittel zum Einsatz kommen, die miteinander reagierende Gruppen aufweisen.

Aus der WO-A-02/32,980 sind wässrige Polyurethan-Beschichtungsmittel bekannt, die wässrige Polyurethan-Oligomer Dispersionen enthalten und eine offene Zeit von mindestens 20 Minuten aufweisen.

Die EP-A-62,106 beschreibt ein Verfahren zur Herstellung von Copolymeren mit erhöhter Wasserfestigkeit durch Emulsionspolymerisation in Gegenwart von Polyvinylalkohol als Schutzkolloid.

Aus der EP-A-538,571 ist die Herstellung von wässrigen und emulgatorfreien Dispersionen bekannt, wobei ausgewählte Monomere in Gegenwart ausgewählter Polyvinylalkohole im Monomerzulaufverfahren umgesetzt werden.

Bei den aus dem Stand der Technik bekannten Verfahren zur Vergrößerung der offenen Zeit wird der Beschichtungszusammensetzung ein Modifiziermittel, in der Regel ein ausgewähltes Polymer, zugesetzt.

Der vorliegenden Erfindung lag die Aufgabe zugrunde, eine Beschichtungszusammensetzung bereitzustellen, bei der durch einfache Maßnahmen und ohne den Zusatz von speziellen Hilfsmitteln die offene Zeit variiert werden kann, und die zur Beschichtung von Lebensmitteln verwendet werden kann.

Die wässrige Beschichtungszusammensetzung enthält
a) eine Kunststoffdispersion auf Basis von (Meth)acrylat-Hompolymeren und/oder (Meth)acrylat-Copolymeren, die durch Emulsionspolymerisation in Gegenwart eines Schutzkolloids hergestellt worden ist,
b) gegebenenfalls Pigmente und/oder Füllstoffe mit einer Pigment-Volumen-Konzentration (PVK) von 0 bis 30%,
c) gegebenenfalls Verlaufshilfsmittel,
d) gegebenenfalls Koaleszenzmittel,
e) gegebenenfalls polymeren Verdicker, und
f) gegebenenfalls weitere an sich übliche Zusatzstoffe.

Die eingesetzte Kunststoffdispersion wird durch Emulsionspolymerisation hergestellt, bei der das Monomer kontinuierlich oder diskontinuierlich dosiert wird.

Kennzeichnend für die eingesetzte Kunststoffdispersion ist deren Herstellung in Gegenwart eines ausgewählten Stabilisators bzw. Stabilisatorgemisches, das als Schutzkolloid wirkt.

Als Stabilisatoren können die an sich bekannten als Schutzkolloide wirkenden polymeren Substanzen eingesetzt werden. Beispiele dafür sind Celluloseether, Polyethylenoxide, Stärkederivate oder insbesondere Polyvinylalkohol.

Neben den Schutzkolloiden können bei der Emulsionspolymerisation weitere Stabilisatoren, wie niedermolekulare Emulgatoren, z.B. auf Basis von Sulfaten, Sulfonsäuren, Carbonsäuren oder Polyethylenoxid, eingesetzt werden.

Bevorzugt werden Kunststoffdispersionen, die in Abwesenheit von Emulgatoren hergestellt worden sind.

Kennzeichnend ist, dass die Schutzkolloide bereits während der Emulsionspolymerisation anwesend sind. Gegebenenfalls können auch nach Abschluss der Polymerisation noch Schutzkolloide und/oder Emulgatoren zugegeben werden.

Besonders bevorzugt wird Polyvinylalkohol als Schutzkolloid eingesetzt.

Typische erfindungsgemäß eingesetzte Polyvinylalkohole weisen ein Zahlenmittel des Molekulargewichts im Bereich von 14.000 bis 205.000 auf (gemessen bei 20°C mit der Methode der Gelpermeationschromatographie (GPC)) (entsprechend der Viskosität einer 4 %-igen wässrigen Lösung bei 20°C von 2 bis 70 mPa*s; gemessen mit dem Kugelfallviskosimeter nach Höppler, DIN 53015).

Polyvinylalkohol wird generell durch Verseifen von Polyvinylacetat hergestellt.

Besonders geeigneter Polyvinylalkohol besitzt vorzugsweise einen Hydrolysegrad von 70 bis 100 mol % und dessen wässrige Lösung besitzt eine Viskosität bei 20°C von 2 bis 70 mPa*s.

Weitere geeignete Polyvinylalkohole können in irgendeiner Art hydrophob bzw. hydrophil modifiziert worden sein.

Beispiele für hydrophob modifizierte Polyvinylalkohole, die in ihrer Hauptkette nicht wasserlösliche Monomerbausteine enthalten, sind ethylenhaltige Polyvinylalkohole vom Typ Exceval® der Firma Kuraray.

Eine andere Möglichkeit ist die Modifizierung durch Pfropfreaktionen an den Alkoholgruppen, wie beispielsweise die Teilacetalisierung der Alkoholgruppen des Polyvinylalkohols, wobei die Polyvinylalkohole mit beliebigen Resten ausgestattet werden können, die entweder hydrophob oder hydrophil sein können, wie beispielsweise Polyvinylalkohole vom Typ Mowiflex® der Firma Kuraray.

Die erfindungsgemäß eingesetzten Polyvinylalkohole werden vorzugsweise zu Beginn der Polymerisation gelöst (üblicherweise in Wasser und zwei bis drei Stunden bei mindestens 90 °C) und vor der Polymerisation vorgelegt.

Die Gesamtmenge der vor und während der Emulsionspolymerisation eingesetzten Schutzkolloide beträgt typischerweise 1 bis 20 Gew. %, vorzugsweise 2 bis 12 Gew. % und besonders bevorzugt 3 bis 11 Gew. %, bezogen auf die Gesamtmenge der eingesetzten Monomeren.

Dabei kann die Gesamtmenge an Stabilisator und gegebenenfalls an Emulgator bereits zu Beginn der Emulsionspolymerisation vorgelegt werden oder bevorzugt wird ein Teil des Stabilisators und gegebenenfalls des Emulgators zu Beginn vorgelegt und der Rest wird nach dem Starten der Polymerisation in ein oder mehreren Schritten oder kontinuierlich zugegeben. Die Zugabe kann getrennt erfolgen oder zusammen mit anderen Komponenten, wie Monomeren und/oder Initiatoren.

Die eingesetzte Kunststoffdispersion auf der Basis von (Meth)acrylaten leitet sich von Acrylaten und/oder Methacrylaten ab, die gegebenenfalls mit weiteren damit copolymerisierbaren Monomeren, insbesondere ethylenisch ungesättigten Kohlenwasserstoffen und/oder geringen Mengen an ethylenisch ungesättigten, ionischen Comonomeren durch radikalische Emulsionspolymerisation erhältlich sind.

Bei den Acrylaten handelt es sich typischerweise um Ester der Acrylsäure mit Alkoholen, vorzugsweise mit ein bis zwölf, vorzugsweise ein bis acht und insbesondere ein bis vier Kohlenstoffatome aufweisenden Alkanolen, wie insbesondere Methanol, Ethanol, n-Butanol, iso-Butanol oder 2-Ethyl-hexanol.

Bevorzugte Monomere dieses Typs sind Acrylsäuremethyl-, -ethyl-, -n-butyl-, -isobutyl und -2-ethylhexylester.

Bei den Methacrylaten handelt es sich typischerweise um Ester der Methacrylsäure mit Alkoholen, vorzugsweise mit ein bis zwölf, vorzugsweise ein bis acht und insbesondere ein bis vier Kohlenstoffatome aufweisenden Alkanolen, wie insbesondere Methanol, Ethanol, n-Butanol, iso-Butanol oder 2-Ethyl-hexanol.

Bevorzugte Monomere dieses Typs sind Methacrylsäuremethyl-, -ethyl-, -n-butyl-, -isobutyl und -2-ethylhexylester.

Neben diesen Acrylsäure- und Methacrylsäureestern können die erfindungsgemäß eingesetzten Kunststoffdispersionen sich noch von weiteren α,β-monoethylenisch ungesättigten Mono- und Dicarbonsäureestern ableiten , wie z.B. von Maleinsäure- und Itaconsäureestern mit den oben genannten Alkoholen.

Daneben können die eingesetzten Kunststoffdispersionen geringe Mengen an von ethylenisch ungesättigten ionischen Comonomeren abgeleiteten Einheiten enthalten, beispielsweise von α,β-monoethylenisch ungesättigten Mono- und Dicarbonsäuren, wie z.B. von Acrylsäure, Methacrylsäure, Maleinsäure und Itaconsäure und deren wasserlöslichen Salzen.

Der Anteil dieser von ethylenisch ungesättigten ionischen Comonomeren abgeleiteten Einheiten beträgt in der Regel weniger als 2 Gew. %, bezogen auf den Gesamtanteil der Monomeren.

Neben den (Meth)acrylsäureestern weisen die eingesetzten Kunststoffdispersionen vorzugsweise weitere Einheiten auf, die sich von ethylenisch ungesättigten Kohlenwasserstoffen ableiten.

Dabei handelt es sich in der Regel um aromatische oder aliphatische α-β-ungesättigte, gegebenenfalls halogen-substituierte Kohlenwasserstoffe, wie Ethen, Propen, 1-Buten, 2-Buten, Vinylchlorid, Vinylidenchlorid, Styrol, α-Methylstyrol, o-Chlorstyrol, wobei Ethen und Styrol bevorzugt sind.

Ferner können Ester von Vinylalkohol mit ein bis achtzehn Kohlenstoffatome aufweisenden Monocarbonsäuren, wie Vinylacetat, Vinylpropionat, Vinyl-n-butyrat, Vinyllaurat, Vinylstearat und Versaticsäurevinylester eingesetzt werden.

Desweiteren können auch Nitrile α,β-monoethylenisch ungesättigter Carbonsäuren, wie Acrylnitril; und/oder konjugierte Diene mit vier bis acht Kohlenstoffatomen, wie 1,3-Butadien und Isopren, eingesetzt werden.

Die (Meth)acrylsäureester und die ethylenisch ungesättigten Kohlenwasserstoffe bilden in der Regel die Hauptmonomeren, die, bezogen auf die Gesamtmenge der nach dem Verfahren der radikalischen wässrigen Emulsionspolymerisation zu polymerisierenden Monomeren normalerweise einen Anteil von mehr als 50 Gew. % auf sich vereinen.

In aller Regel weisen diese Monomeren in Wasser bei Normalbedingungen (25°C, 1 atm) lediglich eine mäßige bis geringe Löslichkeit auf.

Selbstverständlich können weitere Comonomere, welche die Eigenschaften in gezielter Weise modifizieren, zugesetzt werden. Solche Monomere werden im Normalfall lediglich als modifizierende Monomere in Mengen, bezogen auf die Gesamtmenge der zu polymerisierenden Monomeren, von weniger als 50 Gew. %, in der Regel 0,5 bis 20, vorzugsweise 1 bis 10 Gew. % einpolymerisiert.

Monomere, die üblicherweise die innere Festigkeit von Verfilmungen der wässrigen Polymerisatdispersionen erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf.

Beispiele hierfür sind N-Alkylolamide von drei bis zehn Kohlenstoffatome aufweisenden α,β-monoethylenisch ungesättigten Carbonsäuren, unter denen das N-Methylolacrylamid und das N-Methylolmethacrylamid ganz besonders bevorzugt sind sowie deren Ester mit ein bis vier Kohlenstoffatomen aufweisenden Alkanolen. Daneben kommen auch zwei Vinylreste aufweisende Monomere, zwei Vinylidenreste aufweisende Monomere sowie zwei Alkenylreste aufweisende Monomere in Betracht.

Besonders vorteilhaft sind dabei die Di-Ester zweiwertiger Alkohole mit α,β-monoethylenisch ungesättigten Monocarbonsäuren unter denen die Acryl und Methacrylsäure bevorzugt sind.

Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylate sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat.

In diesem Zusammenhang von besonderer Bedeutung sind auch die Methacrylsäure- und Acrylsäure-C₁-C₉-Hydroxyalkylester, wie n-Hydroxyethyl-, n-Hydroxypropyl- oder n-Hydroxybutylacrylat und -methacrylat sowie Verbindungen wie Diacetonacrylamid und Acetylacetoxyethylacrylat bzw. - methacrylat.

Außerdem können auch siliziumorganische Monomere der allgemeinen Formel R³Si(CH₃)₀₋₂(OR⁴)₃₋₁ verwendet werden, wobei R³ die Bedeutung CH₂ = CR⁴-(CH₂)₀₋₁ oder CH₂=CR⁵CO₂-(CH₂)₁₋₃ hat, R⁵ ein unverzweigter oder verzweigter, gegebenenfalls substituierter Alkylrest mit drei bis zwölf Kohlenstoffatomen ist, der gegebenenfalls durch eine Ethergruppe unterbrochen sein kann, und R⁴ für H oder CH₃ steht.

Beispiele hierfür sind Vinylmethyl-dimethoxy-silan, Vinylmethyl-diethoxy-silan, Vinylmethyl-di-n-propoxy-silan, Vinylmethyl-di-iso-propoxy-silan, Vinylmethyl-di-n-butoxy-silan, Vinylmethyl-di-sec.-butoxy-silan, Vinylmethyl-di-tert.-butoxy-silan, Vinylmethyl-di-(2-methoxy-isopropyloxy)-silan und Vinylmethyl-dioctyloxy-silan.

Die vorgenannten Monomeren werden, bezogen auf die Gesamtmenge der zu polymerisierenden Monomeren, meist in Mengen von 0,2 bis 10 Gew. % einpolymerisiert.

Die Herstellung wässriger Polymerdispersionen ist vielfach vorbeschrieben und dem Fachmann daher bekannt [vgl. z.B. Encyclopedia of Polymer Science and Engineering, Vol. 8, S. 659 ff (1987)].

Sie erfolgt durch Emulsionspolymerisation von wenigstens eines (Meth)acrylsäureesters und gegebenenfalls weiterer ethylenisch ungesättigter Monomerer in Gegenwart eines bevorzugt wasserlöslichen Polymerisationsinitiators sowie in Gegenwart von Schutzkolloiden, gegebenenfalls Emulgatoren und üblichen weiteren Zusatzstoffen.

In der Regel erfolgt hierbei der Zusatz der Monomeren durch kontinuierlichen Zulauf.

Die Polymerisation der ethylenisch ungesättigten Monomeren erfolgt in Gegenwart mindestens eines Initiators für die radikalische Polymerisation der ethylenisch ungesättigten Monomeren.

Als Initiatoren für die radikalische Polymerisation zum Starten und Weiterführen der Polymerisation während der Herstellung der Dispersionen kommen alle bekannten Initiatoren in Betracht, die in der Lage sind, eine radikalische, wässrige Emulsionspolymerisation zu starten.

Es kann sich dabei sowohl um Peroxide, wie z.B. Alkalimetallperoxodisulfate als auch um Azoverbindungen handeln.

Als Polymerisationsinitiatoren können auch sogenannte Redoxinitiatoren verwendet werden, die aus mindestens einem organischen und/oder anorganischen Reduktionsmittel und mindestens einem Peroxid und/oder Hydroperoxid zusammengesetzt sind, wie z.B. tert.-Butylhydroperoxid mit Schwefelverbindungen, wie z.B. dem Natriumsalz der Hydroxymethansulfinsäure, Natriumsulfit, Natriumdisulfit, Natriumthiosulfat und Acetonbisulfitaddukt, oder Wasserstoffperoxid mit Ascorbinsäure; als weitere Reduktionsmittel, die mit Peroxiden Radikale bilden können auch reduzierende Zucker eingesetzt werden.

Auch können kombinierte Systeme verwendet werden, die eine geringe Menge einer im Polymerisationsmedium löslichen Metallverbindung enthalten, deren metallische Komponente in mehreren Wertigkeitsstufen auftreten kann, wie z.B. Ascorbinsäure/Eisen(II)sulfat/Wasserstoffperoxid, wobei an Stelle von Ascorbinsäure auch häufig das Natriumsalz der Hydroxymethansulfinsäure, Acetonbisulfitaddukt, Natriumsulfit, Natriumhydrogensulfit oder Natriumbisulfit und an Stelle von Wasserstoffperoxid organische Peroxide wie z.B. tert.-Butylhydroperoxid oder Alkaliperoxodisulfate und/oder Ammoniumperoxodisulfat verwendet werden. Anstelle des genannten Acetonbisulfitaddukts können auch weitere dem Fachmann bekannte Bisulfitaddukte eingesetzt werden, wie sie beispielsweise in der EP-A-778,290 und in den darin zitierten Literaturstellen beschrieben sind.

Weitere bevorzugte Initiatoren sind Peroxodisulfate, wie z.B. Natriumperoxodisulfat.

Die Menge der bei der Emulsionspolymerisation eingesetzten Initiatoren oder Kombinationen von Initiatoren bewegt sich im Rahmen der für wässrige Emulsionspolymerisationen üblich ist. In der Regel wird die Menge des eingesetzten Initiators 5 Gew. %, bezogen auf die Gesamtmenge der zu polymerisierenden Monomeren, nicht überschreiten.

Vorzugsweise beträgt die Menge der eingesetzten Initiatoren, bezogen auf die Gesamtmenge der zu polymerisierenden Monomeren, 0,05 bis 2,0 Gew. %.

Dabei kann die Gesamtmenge an Initiator bereits zu Beginn der Emulsionspolymerisation vorgelegt werden oder bevorzugt wird ein Teil des Initiators zu Beginn vorgelegt und der Rest wird nach dem Starten der Polymerisation in ein oder mehreren Schritten oder kontinuierlich zugegeben. Die Zugabe kann getrennt erfolgen oder zusammen mit anderen Komponenten, wie Monomeren und/oder Stabilisatoren.

Das Molekulargewicht der Emulsionspolymerisate der wässrigen Kunststoffdispersionen kann durch Zugabe geringer Mengen einer oder mehrerer das Molekulargewicht regelnder Substanzen eingestellt werden. Diese sogenannten "Regler" werden im allgemeinen in einer Menge von bis zu 2 Gew. %, bezogen auf die zu polymerisierenden Monomeren, eingesetzt. Als "Regler" können alle dem Fachmann bekannten Substanzen eingesetzt werden. Bevorzugt sind z.B. organische Thioverbindungen, Silane, Allylalkohole und Aldehyde.

Darüber hinaus kann die wässrige Kunststoffdispersion noch eine Reihe weiterer Substanzen, wie zum Beispiel Weichmacher, Konservierungsmittel, Mittel zum Einstellen des pH-Wertes und/oder Entschäumer enthalten.

Die Polymerisationstemperatur beträgt im allgemeinen 20 bis 150 und bevorzugt 60 bis 120°C. Die Polymerisation findet gegebenenfalls unter Druck statt.

Im Anschluss an die eigentliche Polymerisationsreaktion kann es wünschenswert und/oder erforderlich sein, die erhaltene wässrige Kunststoffdispersion weitgehend frei von Geruchsträgern, wie z.B. Restmonomeren und anderen flüchtigen, organischen Bestandteilen zu gestalten. Dies kann in an sich bekannter Weise beispielsweise physikalisch durch destillative Entfernung (insbesondere über Wasserdampfdestillation) oder durch Abstreifen mit einem inerten Gas erreicht werden. Ferner kann die Absenkung der Restmonomeren auch chemisch durch radikalische Nachpolymerisation, insbesondere durch Einwirkung von Redoxinitiatorsystemen, wie sie z.B. in der DE-A-4,435,423 beschrieben sind, erfolgen. Bevorzugt ist eine Nachpolymerisation mit einem Redoxinitiatorsystem aus mindestens einem organischen Peroxid sowie einem organischen und/oder anorganischen Sulfit.

Besonders bevorzugt ist eine Kombination aus physikalischen und chemischen Methoden, wobei nach einer Absenkung des Restmonomer-Gehaltes durch chemische Nachpolymerisation die weitere Absenkung des Restmonomer-Gehaltes mittels physikalischer Methoden auf vorzugsweise <1000 ppm, besonders bevorzugt <500 ppm, insbesondere <100 erfolgt.

Die Monomerkomponenten können vorgelegt werden oder zweckmäßigerweise während der Polymerisation gleichmäßig oder in Dosierprofilen dosiert werden.

Die Emulsionspolymerisation wird üblicherweise bei einem pH-Wert im Bereich von kleiner/gleich 9 durchgeführt. Zur Einstellung des pH-Wertes der Polymerdispersion können prinzipiell Puffersysteme, wie beispielsweise Natriumacetat, verwendet werden.

Bevorzugt ist ein pH-Bereich von 2 bis 9 günstig, bevorzugt ist ein pH-Wert im Bereich zwischen 3 und 8.

Der Feststoffgehalt der eingesetzten Kunststoffdispersionen der Komponente a) liegt typischerweise zwischen 40 und 80 Gew. %, bevorzugt zwischen 50 und 75 % und besonders bevorzugt zwischen 50 und 70 %. Die Gewichtsangaben beziehen sich dabei auf die Gesamtmasse der Dispersion.

Als Komponente b) können die für den Einsatz in Beschichtungszusammensetzungen an sich bekannten Pigmente und/oder Füllstoffe eingesetzt werden. Dabei handelt es sich um Feststoffe auf anorganischer und/oder organischer Basis, die vorzugsweise als Pulver eingesetzt werden. Unter Pigmenten werden im Rahmen dieser Beschreibung Feststoffe verstanden, die einen Brechungsindex von größer gleich 1,75 aufweisen. Unter Füllstoffen werden im Rahmen dieser Beschreibung Feststoffe verstanden, die einen Brechungsindex von kleiner als 1,75 aufweisen.

Beispiele für Pigmente sind Metalloxide, insbesondere Titandioxid.

Beispiele für Füllstoffe sind Erdalkalioxide und/oder -sulfate, insbesondere Calciumcarbonat oder Bariumsulfat.

Die Pigmente und/oder Füllstoffe liegen, falls vorhanden, in der Beschichtungszusammensetzung in Pigment-Volumen-Konzentrationen (PVK) von bis zu 30% vor. Dieses entspricht einem maximalen Volumen von 30 Teilen, bezogen auf 100 Teile der trockenen Beschichtung.

Besonders bevorzugt sind Beschichtungszusammensetzungen, die Pigmente und/oder Füllstoffe enthalten, die ausschließlich feinteilig sind und mittlere Korngrößen D₅₀ von kleiner gleich 0,4 µm aufweisen, vorzugsweise von 0,1 bis 0,4 µm, ganz besonders bevorzugt von 0,2 bis 0,3 µm.

Als Komponente c) können die an sich bekannten Verlaufshilfsmittel eingesetzt werden. Dabei handelt es sich um wassermischbare organische Lösungsmittel, vorzugsweise um wassermischbare mehrwertige Alkohole, deren Alkoholgruppen teilweise verethert sein können. Vorzugsweise werden 1,2-Propylenglykol, Methyldiglykol und Butyldiglykol eingesetzt.

Unter "wassermischbar" wird im Rahmen dieser Beschreibung verstanden, dass das Verlaufshilfsmittel bei 20°C in jedem Verhältnis mit Wasser mischbar ist.

Als Komponente d) können die an sich bekannten Koaleszenzmittel eingesetzt werden. Dabei handelt es sich um nicht oder wenig wassermischbare organische Lösungsmittel, vorzugsweise um nicht oder wenig wassermischbare (teil)veresterte und/oder (teil)veretherte mehrwertige Alkohole. Dabei kann es sich um Diester, Esteralkohole, Diether, Etheralkohole oder Alkoholetherester, abgeleitet von mehrwertigen Alkoholen, handeln. Beispiele dafür sind 2,2,4-Trimethyl-1,3-pentandiol-monoisobutyrat, Ethylenglykol-2-ethylhexylether, Ethylenglykolbutylether, Ethylenglykolpropylether, Dipropylenglykolmonopropylether, Tripropylenglykolmonopropylether, Dipropylenglykolmonobutylether, Tripropylenglykolmonobutylether, Butyldiglykolacetat, Adipinsäure-di-isobutylester, Glutarsäure-di-isobutylester, Bernsteinsäure-di-isobutylester oder Mischungen von zweien oder mehreren dieser Verbindungen handeln. Unter dem Begriff "wenig wassermischbar" ist im Rahmen dieser Beschreibung eine Wassermischbarkeit bei 20°C von weniger als 10 Gew.%, vorzugsweise von weniger als 6,5 Gew. %, bei 20°C zu verstehen.

Als Komponente e) können die an sich bekannten polymeren Verdicker eingesetzt werden. Dabei handelt es sich um hydrophob modifizierte Polyurethan- oder Polyacrylatdispersionen, wie um die Produkte Mowilith® LDM 7002 oder Mowilith® VDM 7000 .

Als weitere Zusatzstoffe f) kommen Dispergiermittel, Netzmittel, Entschäumer oder Puffer in Frage.

In einer bevorzugten Ausführungsform enthält die Beschichtungszusammensetzung mindestens ein Pigment, insbesondere mindestens ein Weißpigment, wie Titandioxid.

Zur Herstellung der wässrigen Beschichtungszusammensetzungen werden die Komponenten a) und gegebenenfalls b) und/oder gegebenenfalls c) und/oder gegebenenfalls d) und/oder gegbenenfalls e) und/oder gegebenenfalls f) in an sich bekannter Weise kombiniert.

Komponente d) (Koaleszenzmittel) wird vorzugsweise dann eingesetzt, wenn die minimale Filmbildetemperatur (MFT) der Beschichtungszusammensetzung ohne Koaleszenzmittel oberhalb der Raumtemperatur liegt.

Ein Verfahren zur Herstellung der oben definierten wässrigen Beschichtungszusammensetzung umfasst die Maßnahmen:
i) Emulsionspolymerisation von Acrylaten und/oder Methacrylaten gegebenenfalls mit ethylenisch ungesättigten Kohlenwasserstoffen in wässriger Phase und in Gegenwart eines Schutzkolloids,
ii) gegebenenfalls Zugabe von Pigment und/oder Füllstoff, und/oder Verlaufshilfsmittel und/oder Koaleszenzmittel, und/oder polymerem Verdicker und/oder von Zusatzstoffen zum wässrigen Emulsionspolymerisat.

Die Beschichtungszusammensetzungen eignen sich in besonderer Weise zur Beschichtung von Oberflächen aller Art. Sie finden insbesondere Einsatz als Farben oder als Lebensmittelbeschichtungen.

Die nachfolgenden Beispiele erläutern die Erfindung.

### Beispiel 1

In einem mit Dosiereinrichtungen und Temperaturregelung ausgerüsteten Polymerisationsreaktor wurden 7 T PVA (Polyvinylalkohol, als 20 %ige wässrige Lösung), 13 T Wasser, 0,14 T Dodecanthiol, 0,05 T Tertiärbutylhydroperoxid und 0,04 T Ascorbinsäure vorgelegt. Bei 70°C wurden ein Gemisch aus 4,7 T PVA (als 20%ige wässrige Lösung), 0,6 T Acrylsäure, 23,3 T MMA (Methylmethacrylat), 23,3 T BuA (Butylacrylat) und 21 T Wasser in 3 Stunden dosiert. Parallel dazu wurden jeweils eine Lösung aus 0,2 T Tertiärbutylhydroperoxid in 1,4 T Wasser und 0,15 T Ascorbinsäure in 1,7 T Wasser dosiert. 30 Minuten nach Dosierende wurde eine Lösung aus 0,03 T Ascorbinsäure in 0,37 T Wasser in 30 Minuten dosiert. Nach einer Nachpolymerisationszeit von insgesamt 1,5 Stunden wurden bei 60°C 0,05 T Tertiärbutylhydroperoxid in 0,35 T Wasser und 0,07 T Natriumformaldehydsulfoxylat in 0,66 T Wasser zugegeben. Bei < 30°C wurde mit 1,26 T Natronlauge (als 10 %ige wässrige Lösung) neutralisiert.

Eine reine Acrylat-Dispersion nur mit Polyvinylalkohol stabilisiert, zeigte einen Feststoffanteil von 50,2 % und eine Glasübergangstemperatur T_{g} von 16,6°C.

Die Teilchengrößenverteilung wies einen mittleren Durchmesser d_{w} von 278 nm auf und einen d_{w} / dₙ Wert von 1,89.

Dabei ist unter dem dₙ Wert das Zahlenmittel (number length mean) und unter dem d_{w} Wert ist das Gewichtsmittel (De Broucker mean) zu verstehen. Diese Werte sind in der Literatur beschrieben, beispielsweise in NF X11-632-2 sowie in NF ISO 9276-2 vom 1.6.00.

Die in dieser Beschreibung angegebenen Werte für dₙ und d_{w} wurde mit Hilfe von Ar-Laser-Aerosol Spektroskopie bestimmt. Diese Methode ist z.B. von J.P. Fischer und E. Nölken in Prod. Colloid & Polymer Sci., 77, 180 (1988) beschrieben.

### Beispiel 2

Vorgehensweise wie Beispiel 1, jedoch wurden 13 T Wasser, 0,05 T Dodecanthiol, 0,05 T Tertiärbutylhydroperoxid und 0,04 T Ascorbinsäure vorgelegt. Bei 70°C wurden ein Gemisch aus 11,7 T PVA (als 20 %ige wässrige Lösung) , 0,6 T Acrylsäure, 24,1 T Styrol, 23,1 T BuA (Butylacrylat) und 23,6 T Wasser in 3 Stunden dosiert.

Diese nur mit Polyvinylalkohol stabilisierte Styrol/Acrylat Dispersion zeigte einen Feststoffanteil von 50,2 % und eine Glasübergangstemperatur T_{g} sowie eine Mindestfilmbildetemperatur MFT von jeweils 23,2 °C.

Die Teilchengrößenverteilung wies einen d_{w} Wert von 336 nm und einen d_{w}/dₙ Wert von 2,335 auf.

### Beispiel 3

In einem mit Dosiereinrichtungen und Temperaturregelung ausgerüsteten Polymerisationsreaktor wurden 24,6 T Wasser und 0,02 T APS (Ammoniumperoxodisulfat) vorgelegt. Bei 80°C wurden ein Gemisch aus 1,3 T Tri-tert.-butylphenylether sulfat, 1,3 T Methacrylsäure, 22,6 T MMA (Methylmethacrylat), 21,3 T BuA (Butylacrylat) und 25,5 T Wasser in 3,5 Stunden dosiert. 30 Minuten nach Dosierende wurde mit 0,9 T Ammoniak heiß neutralisiert. Nach einer Nachpolymerisationszeit von insgesamt 1 Stunde wurde kalt nochmals mit 0,9 T Ammoniak (als 12,5 %ige wässrige Lösung) auf pH 8,5-9 neutralisiert. Die nur mit Emulgatoren stabilisierte Reinacrylatdispersion hatte einen Feststoffanteil von 46% und eine Glasübergangstemperatur von 27°C. Die Teilchengröße betrug d_{w} = 361 nm und d_{w} / dₙ von 2,900.

### Beispiel 4

Vorgehensweise wie Beispiel 1, jedoch wurden 19,6 T Wasser, 0,3 T Tri-tert.-butylphenylethersulfat (als 12,5 %ige wässrige Lösung) und 0,02 T APS (Ammoniumperoxodisulfat) vorgelegt. Bei 80°C wurden ein Gemisch aus 0,9 T Tri-tert.-butylphenylethersulfat (als 50 %ige wässrige Lösung), 1,3 T Methacrylsäure, 22 T MMA, 20,7 T BuA und 21,3 T Wasser in 3,5 Stunden dosiert. 30 Minuten nach Dosierende wurde mit 0,9 T Ammoniak (als 12,5 %ige wässrige Lösung) heiß neutralisiert. Nach einer Nachpolymerisationszeit von insgesamt 1 Stunde wurde kalt nochmals mit 0,9 T Ammoniak (als 12,5 %ige wässrige Lösung) auf pH 8,5-9 neutralisiert und als Nachgabe 10,7 T PVA (als 20 %ige wässrige Lösung) zugegeben. Die Reinacrylatdispersion hatte einen Feststoffanteil von 48% und eine Glasübergangstemperatur von 28°C. Die Teilchengröße betrug d_{w} = 119 nm und d_{w} / dₙ von 1,076.

### Beispiel 5

Vorgehensweise wie Beispiel 1, jedoch wurden 19,6 T Wasser, 0,3 T Tri-tert.-butylphenylethersulfat und 0,02 T Ammoniumperoxodisulfat vorgelegt. Bei 80°C wurde ein Gemisch aus 0,9 T Tri-tert.-butylphenylethersulfat (50%ig), 1,3 T Methacrylsäure, 22 T Methylmethacrylat, 20,7 T Butylacrylat und 21,3 T Wasser in 3,5 Stunden dosiert. 30 Minuten nach Dosierende wurde mit 0,9 T Ammoniak (12,5%ig) heiß neutralisiert. Nach einer Nachpolymerisationszeit von insgesamt 1 Stunde wurde kalt nochmals mit 0,9 T Ammoniak (12,5%ig) auf pH 8,5-9 neutralisiert. Die nur mit Emulgatoren stabilisierte Reinacrylatdispersion hatte einen Feststoffanteil von 46% und eine Glasübergangstemperatur von 28°C. Die Teilchengröße, bestimmt nach der Laser-Aerosol-Methode betrug d_{w} = 110 nm mit einer Verteilung d_{w} / dₙ 1,093.

### Beispiel 6

Vorgehensweise wie Beispiel 1, jedoch wurden 19,7 T Wasser, 1,2 T Nonylphenolpolyglykolether mit 30-EO-Einheiten (20%ig), 0,3 T Ethylenoxid-Propylenoxid-Blockpolymerisat-Sulfat mit 20-EO-Einheiten (50%ig) und 0,027 T Ammoniumperoxodisulfat vogelegt. Bei 80°C wurde ein Gemisch aus 24,3 T Styrol, 20,7 T 2-Ethylhexylacrylat, 1,9 T Methacrylsäure, 1,1 T Methacrylamid in 17,5 T Wasser und 6 T Nonylphenolpolyglykolether mit 30 EO-Einheiten (20%ig), 1,4 T Ethylenoxid-Propylenoxid-Blockpoylmerisat-Sulfat mit 20-EO-Einheiten (50%ig ) und 0,05 T APS in 4 Stunden dosiert. 15 Minuten nach Monomerdosierungsende wurden 0,12 T Ammoniumperoxodisulfat in 1,1 T Wasser und 0,067 T Na-bisulfit in 1,2 T Wasser dosiert. Nach einer Nachpolymerisationszeit von insgesamt 1 h wurde mit 1,8 T Ammoniak (12,5%ig) neutralisiert und abgekühlt.
Die nur mit Emulgatoren stabilisierte Styrol-Acrylatdispersion hatte einen Feststoffanteil von 50% und eine Glasübergangstemperatur von 19°C. Die Teilchengröße, bestimmt nach der Laser-Aerosol-Methode betrug d_{w} = 129 nm mit einer Verteilung d_{w} / dₙ 1,041.

### Anwendungstechnische Prüfungen

Die nach dem oben beschriebenen Verfahren hergestellten Dispersionen wurden in dem nachstehend beschriebenen Glanzfarbenrezept verarbeitet und einer anwendungstechnischen Prüfung unterzogen.

Als Glanzfarbenrezept wurde eine Formulierung für Dispersionsbeschichtungen mit lackähnlichem Charakter (Definition nach DIN 55945, 1999-07) verwendet. Die Pigment-Volumen-Konzentration (PVK) der Formulierung lag bei < 20%.

Die Dispersionsglanzfarbe wurde nach folgender Rezeptur hergestellt (GT = Gewichtsteile):
242 GT Wasser
242 GT 1,2-Propylenglykol
52 GT Dispex GA 40 (Handelsprodukt der Fa. Ciba Speciality Chemicals; Dispergiermittel enthaltend Ammoniumsalz eines Acrylsäurecopolymerisats)
10 GT AMP 90 (2-Amino-2-Methyl-I-Propanol)
20 GT Entschäumer BYK 022
20 GT Biozid Mergal K7
wurden gemischt, unter Rühren 2079 GT Titandioxid Kronos 2190 eingetragen und anschließend mit einem Dissolver mit mindestens 14 m/s Umfangsgeschwindigkeit an der Zahnscheibe für 20 Minuten dispergiert. Nach dem Abkühlen der Pigmentanreibung wurden
185 GT Bindemittel Dispersion
80 GT Pigmentanreibung unter Rühren gemischt.

Während des weiteren Rührens bei moderater Rührgeschwindigkeit wurden
1,8 GT Ammoniak (25%ig)
18,6 GT 1,2-Propylenglykol
4,6 GT Texanol (Handelsprodukt der Fa. Eastman Chemicals; Lösungsmittel enthaltend 2,2,2-Trimethyl-1,3-pentandiol-monoisobutyrat),
und am Ende die Verdickermischung
10,1 GT Mowilith LDM 7002 (ca. 18%ig in Wasser) zugegeben.

Die hergestellten Beschichtungszusammensetzungen waren lagerstabil und zeigten überraschend positive Ergebnisse bei der offenen Zeit und bei der Blockfestigkeit (Blocking).

Die Prüfung der offenen Zeit an der Kante eines Farbfilmes (wet edge open time) wurde nach folgender Methode durchgeführt.

Die zu prüfende Lackfarbe wurde mit einer 100 µm Kastenrakel auf ein nicht saugendes Substrat aufgebracht. Unmittelbar darauf wurde eine Stoppuhr gestartet. Das Substrat wurde senkrecht befestigt und mit einem farbgesättigtem Lackpinsel nach drei Minuten zwölfmal von links nach rechts waagerecht mit leichtem Anpressdruck gestrichen.

Dieser Vorgang wurde alle drei Minuten bis zur Trocknung des Farbfilmes wiederholt.

Das Ende der offenen Zeit war erreicht, sobald ein Absatz an der Einstreichkante deutlich sichtbar wurde.

Die Blockfestigkeit oder das Blocking ist ein Maß für die Oberflächenklebrigkeit von zwei aufeinander gepressten Farbfilmen, wie es zum Beispiel zwischen Fenster und Rahmen auftritt.

Die Bestimmung der Blockfestigkeit wurde wie folgt durchgeführt.

Mit einem 50 µm Spiralrakel wurde die zu prüfende Farbe auf eine Kontrastkarte (Leneta®) aufgebracht. Anschließend ließ man die so beschichtete Kontrastkarte 24 Stunden bei Normklima (23°C, 50% rel. Feuchtigkeit) trocknen. Die getrockneten Kontrastkarten wurden in Streifen geschnitten und diese kreuzweise mit der beschichteten Seite aufeinander gelegt, so dass eine definierte Kontaktfläche der Farbfilme entstand. Diese Kontaktflächen wurden für eine Stunde mit einem Gewicht von 2 kg bei Raumtemperatur belastet.

Die anschließend zur Trennung der Farbfilme benötigte Gewichtskraft (g/sqinch entsprechend g/6,76 cm²) galt als Maß für das Blocking. Ein umso niedrigerer Wert weist auf ein umso besseres Blocking hin.

Die Beispieldispersionen zeigten im Vergleich zu Standarddispersionen in einem ausgewählten Glanzfarbenrezept eine Verdoppelung bis Verdreifachung der offenen Zeit und eine Halbierung der Blockingergebnisse. Die Ergebnisse sind in der nachstehenden Tabelle dargestellt.

**Tabelle**

| Beispiel Nr. | Monomere und Stabilisierung | Offene Zeit (min) | Blocking (g / 6,76 cm²) |
|---|---|---|---|
| I | Acrylat mit PVA^{1), 2)} | 13 | 1100 |
| V-I | Acrylat mit Emulgator³⁾ | 4 | 3000 |
| II | Styrol/Acrylat mit PVA^{1), 4)} | 10 | 1600 |
| V-II | Styrol/Acrylat mit Emulgator⁵⁾ | 4 | 2500 |

| | | | |
|---|---|---|---|
| ¹⁾ PVA = Polyvinylalkohol | | | |
| ²⁾ PVA stabilisierte Reinacrylatdispersion gemäß Bsp. 1 | | | |
| ³⁾ Reinacrylatdispersion stabilisiert mit Emulgatoren gemäß Bsp. 3 | | | |
| ⁴⁾ PVA stabilisierte Styrol-Acrylatdispersion gemäß Bsp. 2 | | | |
| ⁵⁾ Styrol-Acrylatdispersion stabilisiert mit Emulgatoren gemäß Bsp. 6 | | | |

Die nachstehenden Versuche zeigen den Einfluss verschiedenster Stabilisatorsysteme auf die offene Zeit und das Blockingverhalten.

Für Beispiel V-III wurde eine emulgator-stabilisierte, feinteilige Reinacrylatdispersion gemäß Beispiel 5 eingesetzt, die einen d_{w} Wert von 110 nm aufwies.

Für Beispiel V-IV wurde eine emulgator-stabilisierte, grobteilige Reinacrylatdispersion gemäß Beispiel 3 eingesetzt, die einen d_{w} Wert von 350 nm aufwies.

Für Beispiel V-V wurde eine schutzkolloid-stabilisierte, feinteilige Reinacrylatdispersion gemäß Beispiel 4 eingesetzt, die einen d_{w} Wert von 120 nm aufwies und bei der das Schutzkolloid nach der Herstellung der Dispersion zugesetzt wurde.

Für Beispiel III wurde eine schutzkolloid-stabilisierte Reinacrylatdispersion gemäß Beispiel 1 eingesetzt, die einen d_{w} Wert von 270 nm aufwies und bei der das Schutzkolloid während der Herstellung der Dispersion zugesetzt wurde.

Die Ermittlung der offenen Zeit und des Blockingverhaltens erfolgte wie oben beschrieben.

Die Versuche wurden mit der oben beschriebenen Testrezeptur für Glanzfarben durchgeführt.

Die Ergebnisse sind in der nachstehenden Tabelle dargestellt.

**Tabelle**

| Beispiel Nr. | Monomere und Stabilisierung | Offene Zeit (min) | Blocking (g/6,76 cm²) |
|---|---|---|---|
| V-III | Acrylat mit Emulgator¹⁾ | 3 | 548 |
| V-IV | Acrylat mit Emulgator²⁾ | 4 | 188 |
| V-V | Acrylat mit nachgegebenem PVA^{3), 4)} | 3 | 772 |
| III | Acrylat mit PVA^{3), 5)} | 7 | 342 |

| | | | |
|---|---|---|---|
| ¹⁾ Reinacrylatdispersion stabilisiert mit Emulgatoren | | | |
| ²⁾ Reinacrylatdispersion stabilisiert mit Emulgatoren und breiterer Verteilung als V-III | | | |
| ³⁾ PVA = Polyvinylalkohol | | | |
| ⁴⁾ PVA stabilisierte Reinacrylatdispersion; Dispersion wie Beispiel 3 | | | |
| ⁵⁾ PVA stabilisierte Reinacrylatdispersion | | | |

## Patentansprüche

1. Verwendung von in Gegenwart von Schutzkolloiden hergestellten (Meth)acrylatdispersionen zur Verlängerung der offenen Zeit von Beschichtungszusammensetzungen.

2. Verwendung von in Gegenwart von Schutzkolloiden hergestellten (Meth)acrylatdispersionen zur Beschichtung von Lebensmitteln.

3. Verwendung nach einem der Ansprüche 1 oder 2, **dadurch gekennzeichnet, dass** eine wässrige Beschichtungszusammensetzung eingesetzt wird enthaltend
a) eine Kunststoffdispersion auf Basis von (Meth)acrylat-Hompolymeren und/oder (Meth)acrylat-Copolymeren, die durch Emulsionspolymerisation in Gegenwart eines Schutzkolloids hergestellt worden ist,
b) gegebenenfalls Pigmente und/oder Füllstoffe mit einer Pigment-Volumen-Konzentration (PVK) von 0 bis 30%,
c) gegebenenfalls Verlaufshilfsmittel,
d) gegebenenfalls Koaleszenzmittel,
e) gegebenenfalls polymeren Verdicker, und
f) gegebenenfalls weitere an sich übliche Zusatzstoffe.

4. Verwendung nach Anspruch 3, **dadurch gekennzeichnet, dass** Komponente a) ausgewählt wird aus der Gruppe bestehend aus Homo- oder Copolymer abgeleitet von Estern der Acrylsäure mit einwertigen aliphatischen Alkoholen mit ein bis zehn Kohlenstoffatomen, Homo- oder Copolymer abgeleitet von Estern der Methacrylsäure mit einwertigen aliphatischen Alkoholen mit ein bis zehn Kohlenstoffatomen und Copolymer abgeleitet von Estern der Acrylsäure und/oder der Methacrylsäure mit einwertigen aliphatischen Alkoholen mit ein bis zehn Kohlenstoffatomen und ethylenisch ungesättigten Kohlenwasserstoffen, inbesondere mit Ethylen und/oder Styrol.

5. Verwendung nach Anspruch 3, **dadurch gekennzeichnet, dass** das Schutzkolloid zur Herstellung von Komponente a) Polyvinylalkohol ist.

6. Verwendung nach Anspruch 3, **dadurch gekennzeichnet, dass** Komponente c) ein wassermischbarer mehrwertiger Alkohol, insbesondere 1,2-Propylenglykol, ist.

7. Verwendung nach Anspruch 3, **dadurch gekennzeichnet, dass** Komponente d) ein nicht oder wenig wassermischbares organisches Lösungsmittel ist, mit dem die minimale Filmbildungstemperatur abgesenkt wird, insbesondere ein (teil)veresterter und/oder (teil)veretherter mehrwertiger Alkohol.

8. Verwendung nach Anspruch 3, **dadurch gekennzeichnet, dass** Komponente e) ein hydrophob modifiziertes Polyurethan und/oder ein hydrophob modifiziertes Polyacrylat ist.

9. Verwendung nach Anspruch 3, **dadurch gekennzeichnet, dass** die wässrige Beschichtungszusammensetzung zusätzlich als Komponente b) mindestens ein Pigment und/oder mindestens einen Füllstoff enthält.

10. Verwendung nach Anspruch 9, **dadurch gekennzeichnet, dass** nur Pigmente und/oder Füllstoffe enthalten sind, die mittlere Korngrößen D₅₀ von kleiner gleich 0,4 µm aufweisen.

11. Verwendung nach Anspruch 1, **dadurch gekennzeichnet, dass** die Beschichtungszusammensetzung eine Farbe ist.

## Claims

1. The use of (methyl)acrylate dispersions prepared in the presence of protective colloids to extend the open time of coating compositions.

2. The use of (methyl)acrylate dispersions prepared in the presence of protective colloids to coat foods.

3. The use as claimed in once of claims 1 or 2, wherein an aqueous coating composition is used comprising
a) a polymer dispersion based on (meth)acrylate homopolymers and/or (meth)acrylate copolymers and prepared by emulsion polymerization in the presence of a protective colloid,
b) if desired, pigments and/or fillers, with a pigment volume concentration (PVC) of 0 to 30%,
c) if desired, leveling assistants,
d) if desired, coalescers,
e) if desired, polymeric thickeners, and
f) if desired, further, customary additives.

4. The use as claimed in claim 3, wherein component a) is selected from the group consisting of homopolymer or copolymer derived from esters of acrylic acid with monohydric aliphatic alcohols having one to ten carbon atoms, homopolymer or copolymer derived from esters of methacrylic acid with monohydric aliphatic alcohols having one to ten carbon atoms and copolymer derived from esters of acrylic acid and/or of methacrylic acid with monohydric aliphatic alcohols having one to ten carbon atoms and ethylenically unsaturated hydrocarbons, in particular with ethylene and/or styrene.

5. The use as claimed in claim 3, wherein the protective colloid for preparing component a) is polyvinyl alcohol.

6. The use as claimed in claim 3, wherein component c) is a water-miscible polyhydric alcohol, in particular 1,2-propylene glycol.

7. The use as claimed in claim 3, wherein component d) is an organic solvent which is immiscible or of low miscibility with water, and by which the minimum film-forming temperature is lowered, in particular a (partly) esterified and/or (partly) etherified polyhydric alcohol.

8. The use as claimed in claim 3, wherein component e) is a hydrophobically modified polyurethane and/or a hydrophobically modified polyacrylate.

9. The use as claimed in claim 3, wherein the aqueous coating composition further comprises as component b) at least one pigment and/or at least one filler.

10. The use as claimed in claim 9, wherein only pigments and/or fillers having mean particle sizes D₅₀ of less than or equal to 0.4 µm are contained.

11. The use as claimed in claim 1, wherein the coating composition is a colored composition.

## Revendications

1. Utilisation de dispersions de (méth)acrylate préparées en présence de colloïdes protecteurs pour allonger le temps d'utilisation de compositions de revêtement.

2. Utilisation de dispersions de (méth)acrylate préparées en présence de colloïdes protecteurs pour le revêtement d'aliments.

3. Utilisation selon l'une des revendications 1 ou 2, **caractérisée en ce que** l'on utilise une composition aqueuse de revêtement contenant
a) une dispersion de matière synthétique à base d'homopolymères de (méth)acrylate et/ou de copolymères de (méth)acrylate, qui a été préparée par polymérisation en émulsion en présence d'un colloïde protecteur,
b) éventuellement des pigments et/ou des charges avec une concentration en volume du pigment (PVK) de 0 à 30 %,
c) éventuellement un produit nivelant,
d) éventuellement un agent de coalescence,
e) éventuellement des épaississants polymères, et
f) éventuellement d'autres additifs usuels en soi.

4. Utilisation selon la revendication 3, **caractérisée en ce que** le composant a) est choisi dans le groupe constitué d'un homo- ou copolymère dérivé d'esters de l'acide acrylique avec des alcools aliphatiques monohydroxylés ayant 1 à 10 atomes de carbone, un homo- ou copolymère dérivé d'esters de l'acide méthacrylique avec des alcools aliphatiques monohydroxylés ayant 1 à 10 atomes de carbone et un copolymère dérivé d'esters de l'acide acrylique et/ou de l'acide méthacrylique avec des alcools aliphatiques monohydroxylés ayant 1 à 10 atomes de carbone et d'hydrocarbures éthyléniquement insaturés, en particulier avec l'éthylène et/ou le styrène.

5. Utilisation selon la revendication 3, **caractérisée en ce que** le colloïde protecteur pour la préparation de composant a) et d'alcool polyvinylique.

6. Utilisation selon la revendication 3, **caractérisée en ce que** le composant c) est un alcool polyhydroxylé miscible à l'eau, en particulier le 1,2-propylèneglycol.

7. Utilisation selon la revendication 3, **caractérisée en ce que** le composant d) est un solvant organique non miscible ou peu miscible à l'eau, avec lequel on diminue la température minimale de formation de film, en particulier un alcool polyhydroxylé (partiellement) estérifié et/ou (partiellement) éthérifié.

8. Utilisation selon la revendication 3, **caractérisée en ce que** le composant e) est un polyuréthane modifié pour le rendre hydrophobe et/ou un polyacrylate modifié pour le rendre hydrophobe.

9. Utilisation selon la revendication 3, **caractérisée en ce que** la composition aqueuse de revêtement contient additionnellement comme composant b) au moins un pigment et/ou au moins une charge.

10. Utilisation selon la revendication 9, **caractérisée en ce que** sont contenus seulement des pigments et/ou charges, qui présentent des tailles de grains moyennes D₅₀ inférieures ou égales à 0, 4 µm.

11. Utilisation selon la revendication 1, **caractérisée en ce que** la composition de revêtement est une peinture.
